# EUROPÄISCHE PATENTSCHRIFT

(11) **EP 1 566 568 B1**
(45) Veröffentlichungstag und Bekanntmachung des Hinweises auf die Patenterteilung: **17.10.2007**
(21) Anmeldenummer: 05101308.4
(22) Anmeldetag: 21.02.2005
(51) Int. Cl.: F16G 13/04, F16H 7/06

(54) **Kettenrad-Laschenketten-Paarung für Zugmittelgetriebe**
Chain-sprocket assembly for traction drive
Ensemble pignon-chaîne pour transmission à élément de traction

(30) Priorität: 21.02.2004 DE 102004008669
(43) Veröffentlichungstag der Anmeldung: 24.08.2005
(73) Patentinhaber: Rexroth Mecman GmbH, 30880 Laatzen (DE)
(72) Erfinder: Meyer, Thorsten, 30880 Laatzen (DE); Winkelmann, Klaus-B., 30880 Laatzen (DE); Twardzik, Georg, 31094 Marienhagen (DE)
(74) Vertreter: Kietzmann, Lutz

(56) Entgegenhaltungen:
- EP-A- 0 933 557
- EP-A- 1 281 890
- DE-A1- 10 254 243
- DE-A1- 19 721 944
- DE-A1- 19 807 852
- US-A- 5 244 077

## Beschreibung

Die vorliegende Erfindung betrifft eine Kettenrad-Laschenketten-Paarung gemäß Oberbegriff des Anspruchs 1, siehe EP-A-1 281 890. Ferner betrifft die vorliegende Erfindung auch eine spezielle Verwendung dieser Kettenrad-Laschenketten-Paarung.

Das Einsatzgebiet von aus den Metalllaschen aufgebauten Laschenketten erstreckt sich vornehmlich auf fördertechnische Anwendungen. So wird zur Bildung einer linearen Förderstrecke die Laschenkette nach Art eines Förderbandes über eine langgestreckte Trägereinrichtung mit endseitigen Umlenk- oder Antriebsrollen endlos geführt. Dabei greift die mit einer Verzahnung ausgestattete Antriebsrolle in eine korrespondierende Verzahnung der Laschenkette ein. Eine derartige Anordnung wird gewöhnlich in Umgebungen mit hohen Temperaturen - wie beispielsweise bei der Hohlglasherstellung - eingesetzt. Die sämtlichst aus Stahl hergestellten Bestandteile der Laschenkette halten den hierbei auftretenden enormen Temperaturen zuverlässig stand. Daneben kann die Laschenkette der hier interessierenden Art auch als Antriebsmittel im Rahmen eines Zugmittelgetriebes zum Einsatz kommen, beispielsweise bei Automotoren, bei Motoren für allgemeine Zwecke, bei Industriemaschinen und dergleichen.

Bei derartigen formschlüssigen Zugmittelgetrieben gewährleistet die Kettenrad-Laschenketten-Paarung eine schlupffreie Kraftübertragung zwischen dem Zugmittel und dem Kettenrad. Die Laschenkette selbst ist aus den einzelnen flachen über Verbindungszapfen miteinander verketteten Metalllaschen hergestellt. Laschenketten lassen sich in Rollen- bzw. Hülsenketten und Zahnketten unterteilen. Der Formschluss wird bei Rollen- bzw. Hülsenketten über zur Verbindung der Laschen dienende Bolzen realisiert, die an den Zähnen des Kettenrades zur Anlage kommen. Bei der Übertragung besonders hoher Kräfte kann es trotz zusätzlicher Hülsen zur Verformung der Bolzen und insoweit zum Bruch der Kette kommen, dagegen erfolgt bei Laschenketten der hier interessierenden Art der Formschluss nicht über die Bolzen, sondern über speziell ausgestaltetet Metalllaschen. Die Metalllaschen können eine zwischen zwei Durchbrüchen zur Aufnahme der Verbindungszapfen gelegene Ausnehmung aufweisen. In die Ausnehmung ragt bei der Kraftübertragung ein Zahn des Kettenrades hinein, jedoch ohne die Zahnlasche zu berühren. Die eigentliche Kraftübertragung erfolgt über die seitlichen Laschenflanken jeder Metalllasche. Im Gegensatz zu solchen Metalllaschen mit Ausnehmung, die als Zahnlaschen bezeichnet werden, existieren auch Metalllaschen ohne eine derartige Ausnehmung, welche als Zuglaschen bezeichnet werden und sich als Zugmittel für ein Kettenrad geringerer Teilung eignen. Bei diesen Metalllaschen erfolgt die Kraftübertragung ebenfalls über die seitlichen Laschenflanken.

Aus der DE 102 54 243 geht eine Metalllasche bzw. Laschenkette hervor. Diese besteht aus einzelnen Metalllaschen, die nach Art von Zahnlaschen ausgebildet sind. Daneben weist die Laschenkette auch Führungslaschen auf, welche einer seitlichen Führung der Laschenkette zusammenwirken mit dem Kettenrad dienen. Die Verbindung der einzelnen Metalllaschen erfolgt über ein herkömmliches 1-Zapfen-System, dessen Verbindungszapfen nach Art eines Rundbolzens ausgebildet ist.

Daneben ist es auch allgemein bekannt, den Verbindungszapfen im Sinne eines 2-Zapfen-Systems nach Art eines sogenannten zweiteiligen Wiegegelenkes auszubilden.

Eine Dimensionierung der Laschenkette hinsichtlich der hiermit übertragenen Kraft erfolgte bisher über eine entsprechende Wahl der Kettenbreite. Je breiter die Laschenkette ausgeführt wird, desto höhere Kräfte lassen sich hierüber übertragen. Derartig breitbauende Laschenketten erfordern neben einem erhöhten Aufwand an Material und bei der Montage natürlich auch einen größeren Platzbedarf an Einbauorten. Daneben erfordern Laschenketten für die Übertragung hoher Kräfte auch Kettenräder mit recht großem Durchmesser.

Es ist die Aufgabe der vorliegenden Erfindung eine Metalllasche zur Bildung einer hochbeanspruchbaren Laschenkette zu schaffen, die ohne Vergrößerung der Baubreite sehr große Zugkräfte übertragen kann und auch über kleine Kettenräder angetrieben werden kann.

Die Aufgabe wird ausgehend von einer Paarung gemäß dem Oberbegriff des Anspruchs 1 in Verbindung mit dessen kennzeichnenden Merkmalen gelöst.

Die Erfindung schließt die technische Lehre ein, dass die Außenkontur jeder seitlichen Laschenflanke ausgehend von einem den Durchbruch umgebenen Konvexbereich in einen Konkavbereich übergeht, der schließlich in einen geraden Bereich einmündet, welcher sich bis hin zu einem der seitlichen Laschenflanke benachbart angeordneten Laschenfuß erstreckt.

Somit wendet sich die erfindungsgemäße Lösung ab von herkömmlichen konstruktiven Dimensionierungsansätzen, die durch Variation der Kettenbreite oder der Materialstärken praktiziert wurden. Erfindungsgemäß wird der Metalllasche bezüglich der kraftübertragenden einander gegenüberliegenden seitlichen Laschenflanken eine andere Außenkontur verliehen. Im Gegensatz zu herkömmlichen Formen von Metalllaschen geht der den Durchbruch umgebene Konvexbereich der Metalllasche nicht tangential in die Laschenflanke über. Vielmehr wird dieser Bereich der Außenkontur in Anpassung auf ein Kettenrad kleineren Durchmessers mit einem Konkavbereich versehen, der geringere Umschlingungsradien der Laschenkette ermöglicht. Insgesamt ist eine größere Kraftübertragung mit der erfindungsgemäßen formschlüssigen Laschenkette bei geringstem Platzbedarf möglich.

Die Erfindung betrifft Metalllaschen nach Art einer Zahnlasche. Die Metalllaschen lassen sich in besonders einfacher Weise in einem Arbeitsschritt durch Blechstanzen herstellen und somit erfordert die Umsetzung der erfindungsgemäßen Lösung nicht ein aufwendiges Herstellungsverfahren. Lediglich die zur Herstellung erforderlichen Stanzwerkzeuge sind an die erfindungsgemäße geometrische Außenkontur der Metalllaschen anzupassen.

Die erfindungsgemäßen Metalllaschen lassen sich weiterhin sowohl über ein 1-Zapfen-System als auch über ein 2-Zapfen-System zu einer Laschenkette zusammenfügen. Somit erfordert die erfindungsgemäße Lösung keine Restriktion im Hinblick auf die Art der hierfür geeigneten Verbindungszapfen.

Eine die Erfindung hinsichtlich einer weiteren Erhöhung der Belastbarkeit der Laschenkette verbessernde Maßnahme besteht darin, dass mehrere gleichartig geformte Metalllaschen nebeneinander geschichtet angeordnet werden können, was quasi die wirksame Dicke jeder einzelnen Metalllaschen auf einfache Weise erhöht.

Zur Bildung einer Kettenrad-Laschenketten-Paarung mit der erfindungsgemäßen Laschenkette weist das Kettenrad eine Evolventenverzahnung bzw. eine Geradverzahnung auf, wobei in Anpassung daran die durch zwei aufeinanderfolgende Laschen gebildeten korrespondierenden Eingriffslücken der Laschenkette solche Laschenflanken aufweisen, die geometrisch auf die Evolventenverzahnung bzw. Geradverzahnung abgestimmt sind.

Eine die Erfindung im Hinblick auf eine noch höhere Belastbarkeit der Kettenrad-Laschenketten-Paarung verbessernde Maßnahme besteht darin, dass die Zähne des Kettenrades einen solchen Unterschnitt aufweisen, das breitere Zähne entstehen, welche mit korrespondierend gestalteten Metalllaschen der Laschenkette im Eingriff stehen. Durch die breiteren Zähne des Kettenrades kann die Gefahr eines Zahnbruchs beim Kettenrad bei hoher Last minimiert werden. Über die geometrische Außenkontur der Laschen kann des weiteren eine Anpassung an die Zähnezahl des Kettenrades erzielt werden, da die erfindungsgemäße Außenkontur der Metalllaschen im Bereich der seitlichen Laschenflanken dies in weiten Grenzen zulässt.

Vorzugsweise lässt sich solche Kettenrad-Laschenketten-Paarung zur Bildung eines Laufbandes einer nach Art eines Bandförderers ausgebildeten Transporteinrichtung verwenden.

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Fig.1: eine nach Art einer Zuglasche ausgebildete Metalllasche des Standes der Technik;
- Fig.2: eine nach Art einer Zahnlasche ausgebildete Metalllasche des Standes der Technik;
- Fig.3: eine nach Art einer Zuglasche ausgebildete erfmdungsgemäße Metalllasche für ein 1-Zapfen-Gelenk;
- Fig.4: eine nach Art einer Zahnlasche ausgebildete Metalllasche für ein 1-Zapfen-Gelenk;
- Fig.5: eine nach Art einer Zuglasche ausgebildete Metalllasche für ein 2-Zapfen-Gelenk;
- Fig.6: eine nach Art einer Zahnlasche ausgebildete Metalllasche für ein 2-Zapfen-Gelenk;
- Fig.7: eine Kettenrad-Laschenketten-Paarung aus Zuglaschen für ein 2-Zapfen-Gelenk;
- Fig.8: eine Kettenrad-Laschenketten-Paarung aus Zuglaschen für ein 1-Zapfen-Gelenk;
- Fig.9: nach der Erfindung eine Kettenrad-Laschenketten-Paarung aus Zahnlaschen für ein 2-Zapfen-Gelenk, und
- Fig.10: nach der Erfindung eine Kettenrad-Laschenketten-Paarung aus Zahnlaschen für ein 1-Zapfen-Gelenk.

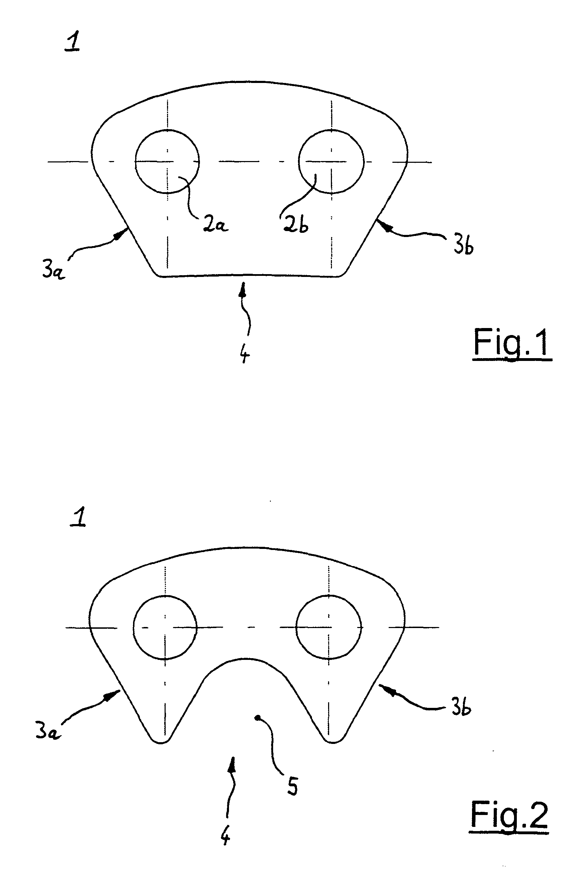

Die in der Fig.1 dargestellte Metalllasche 1 des Standes der Technik besteht aus einem Stahlblech und ist durch Blechstanzen hergestellt. Die beiden beabstandet voneinander angeordneten Durchbrüche 2a und 2b dienen zur Aufnahme von - nicht weiter dargestellt - runden Verbindungszapfen. Die Metalllasche 1 ist hier nach Art einer Zuglasche ausgebildet, was bedeutet, dass die Metalllasche 1 zwischen zwei Zähnen eines - hier nicht weiter dargestellten - Kettenrades in Eingriff gelangt, und zwar über die beiden einander gegenüberliegenden seitlichen Laschenflanke 3a und 3b. Bei dieser Metalllasche 1 des Standes der Technik geht der den Durchbruch 2a bzw. 2b umgebene Außenradius der Metalllasche 1 tangential in die Laschenflanke 3a bzw. 3b über. Wie eingangs erläutert hat sich diese Gestaltung für die Übertragung besonders hoher Kräfte als ungünstig erwiesen.

Die Metalllasche des Standes der Technik gemäß Fig.2 ist im Unterschied zu der vorstehend beschriebenen Ausführungsform als Zahnlasche ausgebildet. Diese besitzt im Bereich des Laschenfusses 4 eine Ausnehmung 5. Die Ausnehmung 5 bildet eine Freilassung für einen dort hineinragenden - hier nicht weiter dargestellt - Zahn des korrespondierenden Kettenrades, der allerdings nicht mit der Metalllasche 1 in Kontakt tritt. Die Kraftübertragung erfolgt auch hier allein über die beiden einander gegenüberliegenden seitlichen Laschenflanken 3a und 3b.

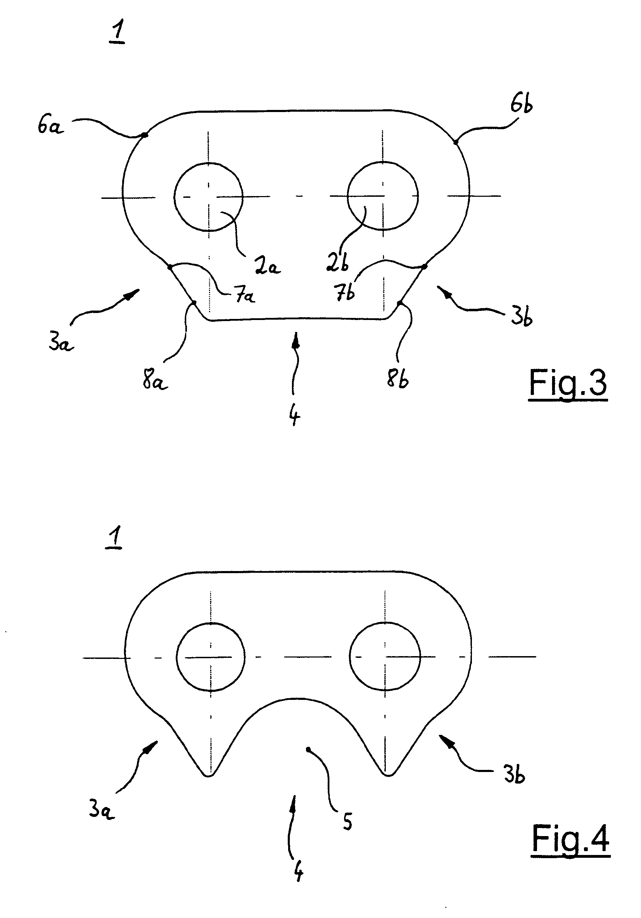

Aus der Fig.3 geht eine Metalllasche 1 hervor, deren beiden einander gegenüberliegenden seitlichen Laschenflanken 3a und 3b gegenüber dem vorstehend beschriebenen Stand der Technik eine spezielle Formgebung besitzen, was eine Übertragung einer größeren Kraft ermöglicht. Demgemäß geht die Außenkontur jeder seitlichen Laschenflanke 3a und 3b ausgehend von einem den Durchbruch 2a bzw. 2b umgebenen Konvexbereich 6a bzw. 6b in einen Konkavbereich 7a bzw. 7b über, der schließlich in einen geraden Bereich 8a bzw. 8b einmündet, welcher sich bis hin zu dem der seitlichen Laschenflanke 3a bzw. 3b benachbart angeordneten Laschenfuß 4 erstreckt.

In der Ausführungsform gemäß Fig.4 ist die Metalllasche 1 nach Art einer Zahnlasche ausgebildet und weist dementsprechend im Bereich des Laschenfusses 4 eine Ausnehmung 5 auf. Ansonsten stimmt der Aufbau dieser Metalllasche 1 mit der vorstehenden Ausführungsform überein, auf deren Beschreibung insoweit verwiesen wird.

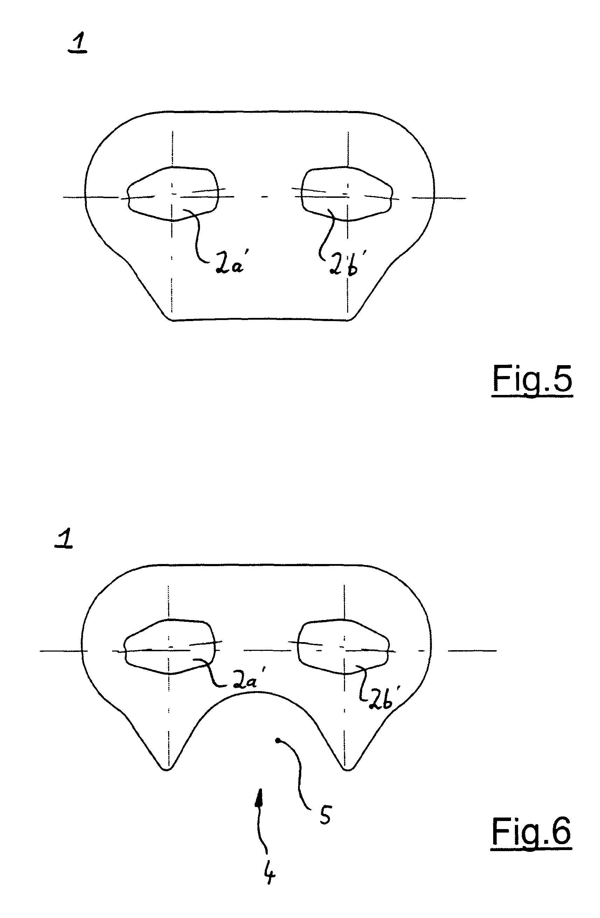

Die Ausführungsform gemäß Fig.5 zeigt eine Zahnlasche, die gegenüber den vorstehend beschriebenen Ausführungsformen Durchbrüche 2a' und 2b' aufweist, die ein speziellen Querschnitt besitzen. Der im Wesentlichen polygonförmige Querschnitt der Durchbrüche 2a' und 2b' ist abgestimmt auf die Verwendung eines 2-Zapfen-Systems, hier auf - nicht weiter dargestellte - Wiegegelenkbolzen.

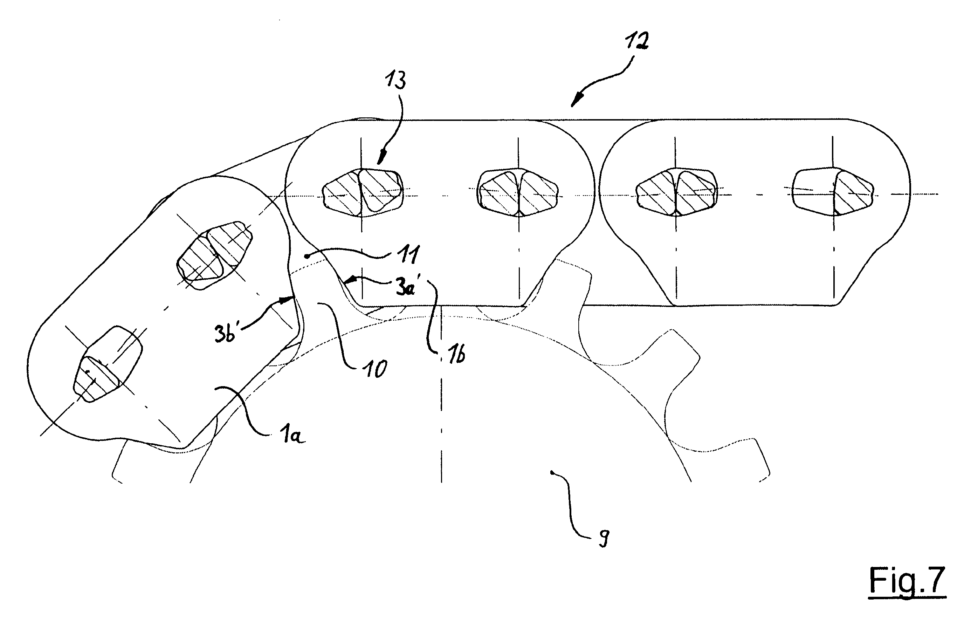

In der Fig.7 ist eine Kettenrad-Laschenketten-Paarung dargestellt, deren Kettenrad 9 eine Evolventenverzahnung aufweist. Jeder Zahn 10 dieser Evolventenverzahnung des Kettenrades 9 gelangt in eine durch zwei aufeinanderfolgende Laschen 1a und 1b gebildete Eingriffslücke 11 der Laschenkette 12. Die den Zahn 10 des Kettenrades 9 einschließenden Laschenflanken 3a' und 3b' sind erfindungsgemäß konkav ausgebildet und gleichzeitig an die Geradverzahnung des Kettenrades 9 angepasst. Diese spezielle Kettenrad-Laschenketten-Paarung ermöglicht die Übertragung besonders großer Zugkräfte.

Die Metalllaschen 1 sind hier nach Art von Zuglaschen ausgebildet, wobei die Verkettung der Metalllaschen 1 über ein 2-Zapfen-System erfolgt. Als 2-Zapfen-System wird hier in jedem Durchbruch ein zweiteiligen Wiegegelenkbolzen 13 verwendet.

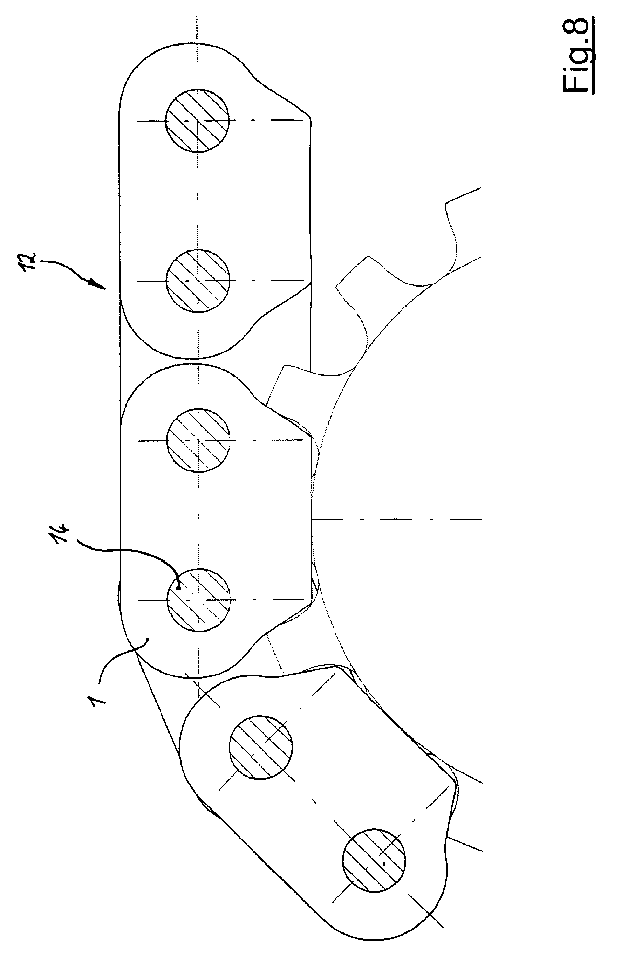

Die in der Figur 8 dargestellte Kettenrad-Laschenketten-Paarung unterscheidet sich von der vorstehend beschriebenen Ausführungsform dahingehend, dass hier als Verbindungszapfen ein 1-Zapfen-System zum Einsatz kommt. Als 1-Zapfen-System werden hier Rundbolzen 14 verwendet. Ansonsten entspricht diese Ausführungsform der vorstehend beschriebenen Variante.

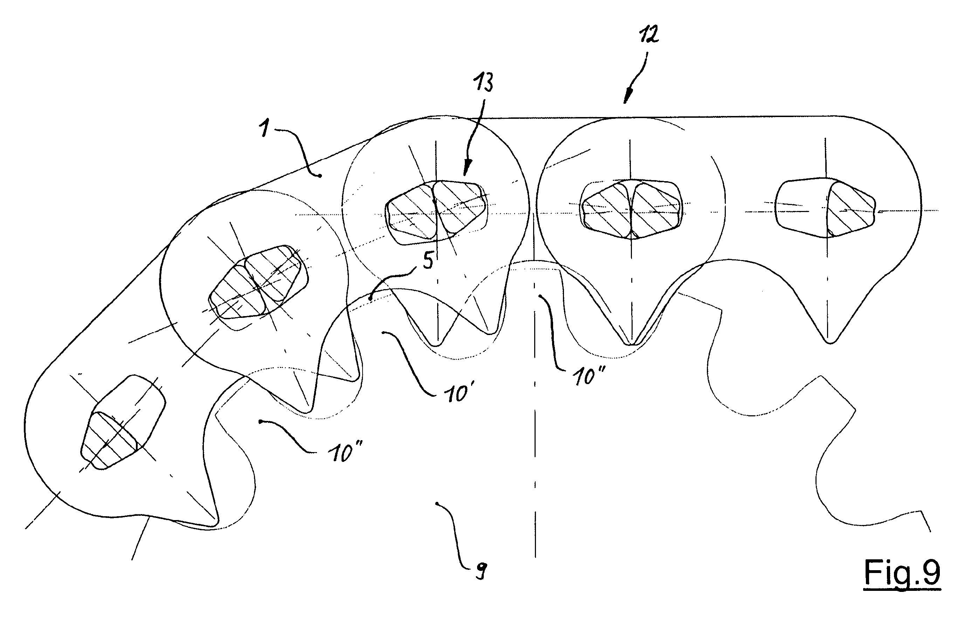

Die in der Figur 9 dargestellte Kettenrad-Laschenketten-Paarung besitzt eine Laschenkette 12, welche aus Metalllaschen 1 gebildet ist, die nach Art von Zahnlaschen gestaltet sind. Die Ausnehmungen 5 jeder Metalllasche 1 bildet einen Freiraum für einen Zahn 10' des Kettenrades 9. Die dem Zahn 10' beidseits benachbart gelegenen Zähne 10" und 10"' gelangen dagegen in Eingriff mit der Metalllasche 1. Der die Metalllachen 1 verkettende Verbindungszapfen ist hier als zweiteiliger Wiegegelenkbolzen 13 ausgeführt.

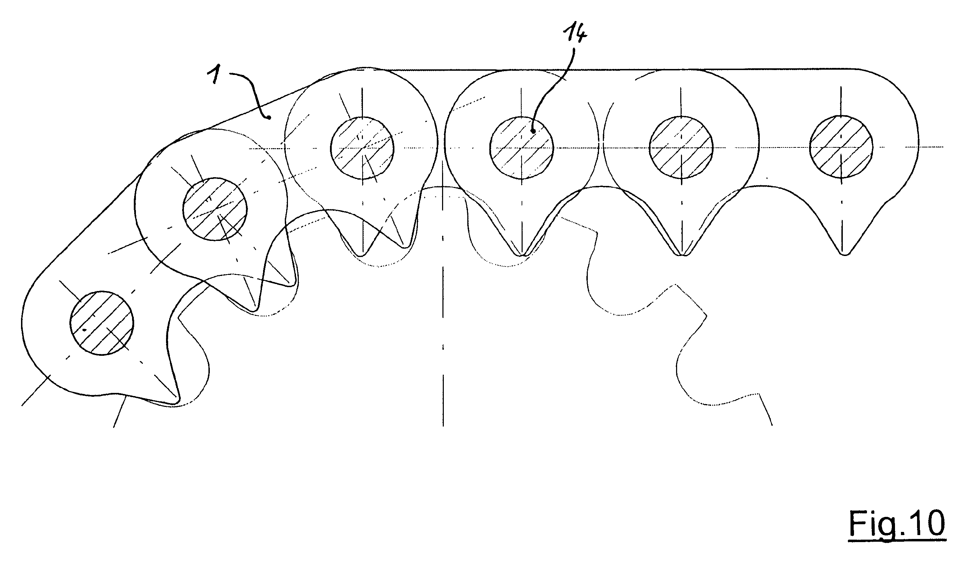

Die in Figur 10 dargestellte Kettenrad-Laschenketten-Paarung bedient sich im Gegensatz hierzu eines als Rundbolzen 14 ausgebildeten Verbindungszapfens zum Verketten der einzelnen Metalllaschen 1. Ansonsten entspricht der Aufbau dieser Kettenrad-Laschenketten-Paarung der vorstehend beschriebenen Ausführungsform.

Vorzugsweise lassen sich die vorstehend beschriebenen Kettenrad-Laschenketten-Paarungen zur Bildung eines Bandförderers verwenden, wobei die Laschenkette 12 das Laufband darstellt, welches über mindestens zwei Kettenräder geführt ist.

### Bezugszeichenliste

- **1**: Metalllasche
- **2**: Durchbruch
- **3**: Laschenflanke
- **4**: Laschenfuß
- **5**: Ausnehmung
- **6**: Konvexbereich
- **7**: Konkavbereich
- **8**: Geraderbereich
- **9**: Ketterad
- **10**: Zahn
- **11**: Eingriffslücke
- **12**: Laschenkette
- **13**: Wiegegelenkbolzen
- **14**: Rundbolzen

## Patentansprüche

1. Kettenrad-Laschenketten-Paarung für Zugmittelgetriebe, umfassend mindestens eine Laschenkette, umfassend eine Vielzahl von Metalllaschen (1), die nach Art einer Zahnlasche ausgebildet sind und jeweils über mindestens zwei beabstandet voneinander angeordnete Durchbrüche zur Aufnahme von Verbindungszapfen verfügen, wobei zumindest zwei einander gegenüberliegende seitliche Laschenflanken zur Kraftübertragung vorgesehen sind, wobei die Außenkontur jeder seitlichen Laschenflanke ausgehend von einem den Durchbruch umgebenden Konvexbereich in einen Konkavbereich übergeht, der schließlich in einen geraden Bereich einmündet, welcher sich bis hin zu einem der seitlichen Laschenflanke benachbart angeordneten Laschenfuß erstreckt,
**dadurch gekennzeichnet, dass** die durch zwei anfeinanderfolgende Laschen gebildeten korrespondierenden Eingriffslücken der Laschenkette (9) solche Laschenflanken aufweisen, die geometrisch auf eine Evolventenverzahnung oder Geradverzahnung der Zähne des Kettenrades (9) abgestimmt sind, worüber der Eingriff von Zähnen (10", 10"') des Kettenrades (9) erfolgt, wogegen eine jeweilige Ausnehmung (5) einen Freiraum für einen Zahn (10') des Kettenrades (9) bildet.

2. Kettenrad-Laschenketten-Paarung nach Anspruch 1,
**dadurch gekennzeichnet, dass** die Metalllasche (1) in einem Fertigungsschritt durch Blechstanzen hergestellt ist.

3. Kettenrad-Laschenketten-Paarung nach Anspruch 1,
**dadurch gekennzeichnet, dass** die Verbindungszapfen im Sinne eines 1-Zapfen-Systena,s nach Art eines Rundbolzens (14) ausgebildet sind (Fig. 8).

4. Kettenrad-Laschenketten-Paarung Laschenkette nach Anspruch 1,
**dadurch gekennzeichnet, dass** die Verbindungszapfen im Sinne eines 2-Zapfen-Systems nach Art eines zweiteiligen Wiegegelenkbolzens (13) ausgebildet sind (Fig. 7).

5. Kettenrad-Laschenketten-Paarung nach Anspruch 1,
**dadurch gekennzeichnet, dass** das zur Erhöhung der Belastbarkeit jeweils mehrere paketartig nebeneinandergeschichtete Metalllaschen (1) vorgesehen sind.

6. Kettenrad-Laschenketten-Paarung nach Anspruch 1,
**dadurch gekennzeichnet, dass** zur weiteren Erhöhung der Belastbarkeit die Zähne (10) des Kettenrades (9) einen solchen Unterschnitt aufweisen, dass breitere Zähne entstehen, welche mit korrespondierend gestalteten Metalllaschen (1) der Laschenkette (12) im Eingriff stehen.

7. Kettenrad-Laschenketten-Paarung nach Anspruch 1,
**dadurch gekennzeichnet, dass** über die geometrische Außenkontur der Metalllaschen (1) eine Anpassung an die Zähnezahl des Kettenrades (9) erfolgt.

8. Verwendung einer Kettenrad-Laschenketten-Paarung nach mindestens einem der vorstehenden Ansprüche zur Bildung eines Laufbandes einer nach Art eines Bandförderers ausgebildeten Transporteinrichtung.

## Claims

1. A sprocket-band-chain combination for belt and chain drives, comprising at least one band chain, comprising a plurality of metal plates (1) formed in the manner of a tooth plate and each having at least two spaced through-holes to receive pivot pins, wherein at least two opposite lateral plate flanks are provided for force transmission, wherein the outer contour of each lateral plate flank transits from a convex portion surrounding the through hole to a concave portion and finally to a straight portion extending to a plate foot arranged adjacent to the lateral plate flank,
**characterised in that** corresponding engagement gaps formed by two subsequent plates of the band chain have such plate flanks which are geometrically matched to the involute toothing or spur toothing of the teeth of the sprocket (9), which enables the engagement of teeth (10", 10"') of the sprocket (9), whereas each recess (5) forms a free space for a tooth (10') of the sprocket (9).

2. The sprocket-band-chain combination according to claim 1,
**characterised in that** the metal plate (1) is manufactured in a single manufacturing step by sheet stamping.

3. The sprocket-band-chain combination according to claim 1,
**characterised in that** the pivot pins are formed to create a one-pin system in the manner of a round pivot pin (14) (Fig. 8).

4. The sprocket-band-chain combination according to claim 1,
**characterised in that** the pivot pins are formed to create a two-pin system in the manner of a two-part cradle-type pivot pin (13) (Fig. 7).

5. The sprocket-band-chain combination according to claim 1,
**characterised in that** in each case a plurality of stacked metal plates (1) are used to increase load capacity.

6. The sprocket-band-chain combination according to claim 1,
**characterised in that**, to further increase load capacity, the teeth (10) of the sprocket (9) are undercut in such a way that wider teeth result, which engage correspondingly formed metal plates (1) of the band chain (12).

7. The sprocket-band-chain combination according to claim 1,
**characterised in that** a match with the number of teeth of the sprocket (9) is achieved by the geometry of the outer contour of the metal plates (1).

8. Use of a sprocket-band-chain combination according to at least one of the preceding claims, for creating a running belt of a transporting apparatus formed in the manner of a conveyor belt.

## Revendications

1. Ensemble pignon-chaîne à plaquettes pour transmission à élément de traction, comprenant au moins une chaîne, qui comprend une pluralité de plaquettes métalliques (1) qui sont réalisées à la manière d'une plaquette dentée et qui présentent au moins deux traversées agencées à distance l'une de l'autre pour recevoir des tenons de liaison, dans lequel au moins deux flancs de plaquettes latérales mutuellement opposés sont prévus pour la transmission de forces, et le contour extérieur de chaque flanc de plaquette latérale, partant d'une zone convexe qui entoure les traversées, se transforme en une région concave qui débouche finalement dans une zone rectiligne qui s'étend jusqu'à un pied de plaquette agencé au voisinage du flanc de plaquette latérale,
**caractérisé en ce que** les creux d'engagement correspondants formés par deux plaquettes qui se suivent de la chaîne (8) présentent des flancs de plaquettes tels qu'ils sont accordés à une denture à développante ou à une denture droite des dents du pignon (9), via laquelle a lieu l'engagement des dents (10", 10"') du pignon (9), tandis qu'un évidement respectif (5) forme un espace libre pour une dent (10') du pignon (9).

2. Ensemble pignon-chaîne à plaquettes selon la revendication 1,
**caractérisé en ce que** la plaquette métallique (1) est fabriquée en une passe de fabrication par poinçonnage de tôle.

3. Ensemble pignon-chaîne à plaquettes selon la revendication 1,
**caractérisé en ce que** les tenons de liaison sont réalisés à la manière d'un goujon cylindrique (14) dans le sens d'un système à tenon unique (figure 8).

4. Ensemble pignon-chaîne à plaquettes selon la revendication 1,
**caractérisé en ce que** les tenons de liaison sont réalisés à la manière d'un goujon articulé basculant en deux parties (13) dans le sens d'un système à deux tenons (Figure 7).

5. Ensemble pignon-chaîne à plaquettes selon la revendication 1,
**caractérisé en ce que**, pour augmenter la capacité de charge, on prévoit à chaque fois plusieurs plaquettes métalliques (1) posées les unes contre les autres à la manière d'un empilage.

6. Ensemble pignon-chaîne à plaquettes selon la revendication 1,
**caractérisé en ce que**, pour augmenter encore la capacité de charge, les dents (10) du pignon (9) présentent une contre-dépouille telle qu'il en résulte des dents plus larges qui sont en engagement avec des plaquettes métalliques (1), de réalisation correspondante, de la chaîne à plaquettes (12).

7. Ensemble pignon-chaîne à plaquettes selon la revendication 1,
**caractérisé en ce qu'**une adaptation au nombre de dents du pignon (9) a lieu par l'intermédiaire du contour extérieur géométrique des plaquettes métalliques (1).

8. Utilisation d'un ensemble pignon-chaîne à plaquettes selon l'une au moins des revendications précédentes pour la réalisation d'une bande en circulation d'un système de transport réalisé à la manière d'un convoyeur à bande.
